# EUROPÄISCHE PATENTSCHRIFT

(11) **EP 0 813 015 B1**
(45) Veröffentlichungstag und Bekanntmachung des Hinweises auf die Patenterteilung: **22.11.2000**
(21) Anmeldenummer: 97109274.7
(22) Anmeldetag: 09.06.1997
(51) Int. Cl.: F16L 35/00, B65D 59/06, B62D 49/00

(54) **Schutzkappe für Hydraulikkupplungen**
Protection cap for hydraulic couplings
Capuchon de protection pour couplages hydrauliques

(30) Priorität: 10.06.1996 US 661248
(43) Veröffentlichungstag der Anmeldung: 17.12.1997
(73) Patentinhaber: DEERE & COMPANY, Moline, Illinois 61265-8098 (US)
(72) Erfinder: Calhoun, Norman Lee, Cedar Falls, Iowa 50613 (US)
(74) Vertreter: Feldmann, Bernhard

(56) Entgegenhaltungen:
- EP-A- 0 040 403
- US-A- 4 016 908
- US-A- 4 481 977

## Beschreibung

Die Erfindung betrifft eine Schutzkappe, die dem Verschließen oder Abdecken der Öffnung einer Hydraulikkupplung dient.

Landwirtschaftliche Fahrzeuge, wie Ackerschlepper, sind gewöhnlich mit hydraulischen Anschlußkupplungen ausgestattet, so daß sich externe Hydraulikmotoren oder Hydraulikzylinder anschließen und durch das Hydrauliksystem des Schleppers antreiben lassen. Solche Anschlüsse müssen vor Feuchtigkeit und Verschmutzung geschützt werden. Es ist für diesen Zweck bekannt, in die Anschlußkupplungen Schutzkappen einzusetzen. Eine gewerblich verfügbare Schutzkappe enthält eine hohle zylindrische flexible Gummihülse, deren eines Ende durch eine flexible Membran verschlossen ist. Die Membran weist einen Schlitz auf, durch den sich ein Kupplungsstecker einstecken läßt. Wenn kein Kupplungsstecker eingesteckt ist, liegen die Ränder des Schlitzes aneinander und verschließen den Schlitz. Diese aus dem Stand der Technik bekannte Schutzkappe schließt jedoch häufig die Anschlußkupplung nicht vollständig ab. Mit der Zeit können die Ränder des Schlitzes ihr "Gedächtnis" verlieren und bei herausgezogenem Kupplungsstecker nicht mehr zuverlässig schließen. Solche Schutzkappen bieten auch keinen ausreichenden Schutz, sofern sie Hochdruckreinigern ausgesetzt sind.

Eine solche Schutzkappe ist zum Beispiel aus der EP-A- 0 040 403 bekannt.

Die der Erfindung zugrunde liegende Aufgabe wird darin gesehen, eine Schutzkappe anzugeben, die ihre Schließfunktion dauerhaft beibehält und, die einen ausreichenden Dichtigkeitsschutz auch gegenüber Hochdruckreinigern bietet. Die Schutzkappe soll automatisch ein Mindestmaß an Dichtigkeit liefern, sofern der Kupplungsstecker lediglich herausgezogen wird und sie soll sich manuell in eine Lage mit erhöhter Schließfunktion bringen lassen.

Die Aufgabe wird erfindungsgemäß durch die Merkmale des Anspruchs 1 gelöst. Weitere vorteilhafte Ausgestaltungen und Weiterbildungen der Erfindung gehen aus den Unteransprüchen hervor.

Eine erfindungsgemäße Schutzkappe enthält im wesentlichen eine hohle Gummihülse und eine flexibel mit der Gummihülse verbundene Klappe. Die Hülse bzw. der Hülsenabschnitt weist einen inneren Wulstrand, der der dichtenden Anlage eines Kupplungssteckers dient, und eine äußere Randzone auf. Von einer Seite der äußeren Randzone steht ein Hülsenbefestigungselement ab. Die Klappe weist einen scheibenförmigen Grundkörper, der mit einem Ende der Hülse zur Anlage gebracht werden kann, ein Klappenbefestigungselement, das von einer Seite des Grundkörpers absteht und daß mit dem Hülsenbefestigungselement verklebt ist, ein scheibenförmiges Dichtelement, welches einen Winkel zu der Ausrichtung des Grundkörpers einnimmt, und einen Halsabschnitt auf, der das Dichtelement mit dem Grundkörper verbindet. Der Grundkörper, das Dichtelement und der Halsabschnitt bilden eine Vertiefung, die sich in eine Richtung öffnet, die von dem Hülsenbefestigungselement weg weist. Die Klappe ist in eine passive Schließlage, in der das Dichtelement an einem äußeren Bereich des inneren Wulstrandes anliegt, sowie in eine aktive Schließlage bewegbar, in der die Klappe lösbar in dem Hülsenabschnitt einrastet und die nach außen weisende Öffnung des Hülsenabschnitts verschließt. In einer weiteren Ausgestaltung der Erfindung greift das Dichtelement in seiner aktiven Schließlage an einem inneren Bereich des inneren Wulstrandes an und ein Bereich des inneren Wulstrandes wird durch die Vertiefung aufgenommen. Gemäß einer weiteren bevorzugten Ausgestaltung der Erfindung ist eine Vertiefung in eine innere Oberfläche der Hülse gegenüber dem Hülsenbefestigungselement eingelassen. Ein Teil des Dichtelements wird durch die Vertiefung aufgenommen, wenn sich die Klappe in ihrer aktiven Schließlage befindet. Das Klappenbefestigungselement ist mit einer Vorspannung versehen, durch die die Klappe in ihre passive Schließlage gedrängt wird, ohne daß eine manuelle Beeinflussung erfolgt.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Querschnittsdarstellung einer erfindungsgemäßen Schutzkappe in ihrer aktiv wirksamen geschlossenen Schließlage,
- Fig. 2: eine Ansicht der Schutzkappe gemäß Fig. 1 in Richtung der Mittellinie ihrer Kupplungsöffnung mit der Schutzkappe in völlig geöffneter Lage,
- Fig. 3: eine Querschnittsdarstellung der erfindungsgemäßen Schutzkappe gemäß Fig. 1 in ihrer passiven Schließlage,
- Fig. 4: eine Querschnittsdarstellung einer alternativen Ausführung der erfindungsgemäßen Schutzkappe in aktiv wirksamer geschlossener Schließlage und
- Fig. 5: eine Querschnittsdarstellung der Schutzkappe gemäß Fig. 4 in ihrer passiven Schließlage.

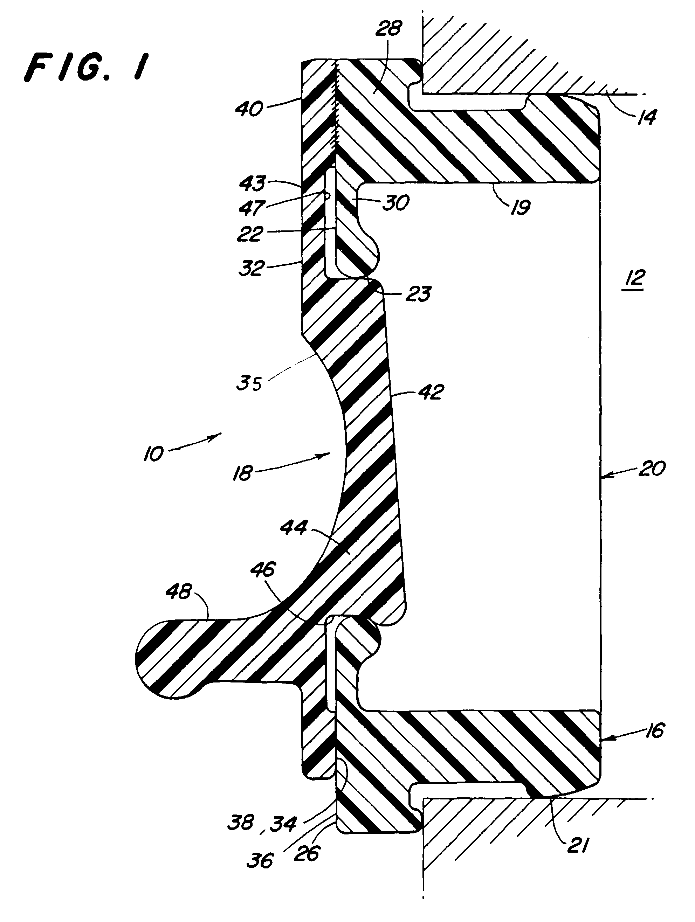

Gemäß Fig. 1 ist eine Abdeckung oder Schutzkappe 10 in die Öffnung 12 einer hydraulischen Anschlußkupplung 14, wie sie beispielsweise bei Ackerschleppern Verwendung finden, eingesetzt. Die Schutzkappe 10 enthält einen Hülsenabschnitt 16 und eine Klappe 18.

Der Hülsenabschnitt 16 enthält ein hohles zylindrisches Hülsenteil 20, das in eine Kupplungsöffnung 12 eingesetzt ist. In dem Hülsenteil 20 ist eine zylindrische Ausnehmung 19 ausgebildet. Eine ringförmige Rückhalterippe 21 steht von der äußeren Oberfläche des Hülsenteils 20 vor und dient dem dichtenden Eingriff mit der Innenwandung der Kupplungsöffnung 12. Von einem axial äußeren Ende des Hülsenteils 20 erstreckt sich ein inner Wulstrand 22 radial nach innen. Ein innerer Rand bzw. eine innere Lippe 23 des Wulstrandes 22 ist als Kupplungsdichtung ausgebildet, die einer dichtenden Anlage mit einem nicht gezeigten, in die Kupplungsöffnung 12 einführbaren Kupplungsstecker dient. Eine kreisförmige äußere Randzone 26 erstreckt sich von dem Ende des Hülsenteils 20 radial nach außen. Ein Hülsenbefestigungselement 28 springt von einer Seite der äußeren Randzone 26 vor. Der innere Wulstrand 22 hat einen ringförmigen Abschnitt 30, welcher sich von dem Hülsenteil 20 zur inneren Lippe 23 erstreckt. Die innere Lippe 23 hat eine teilweise kreisförmige Querschnittsform mit einem äußeren Durchmesser, der größer ist als die Dicke des ringförmigen Abschnitts 30.

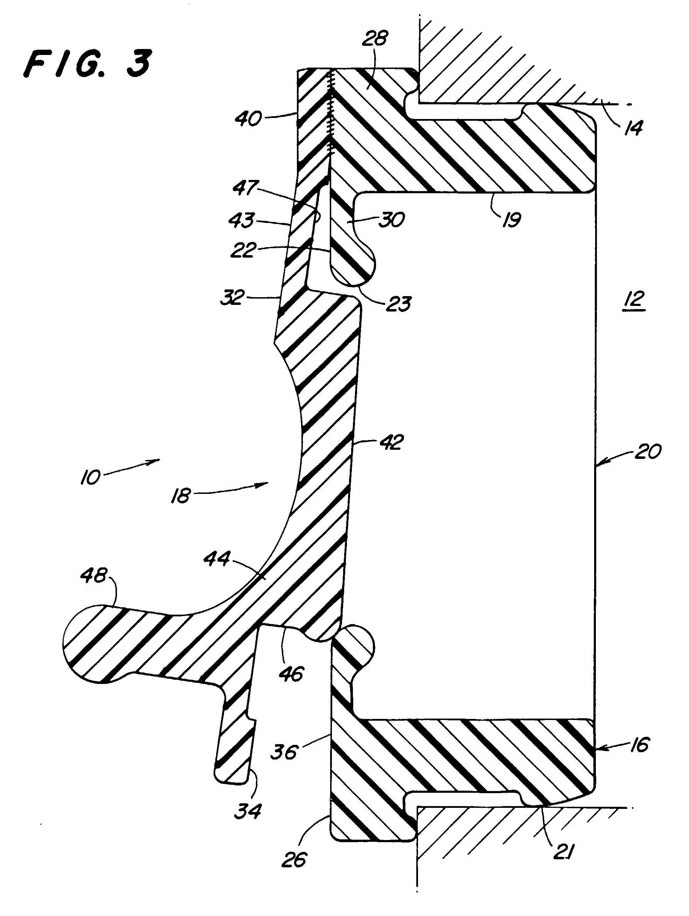

Die Klappe 18 weist einen scheibenförmigen Grundkörper 32 mit einer ringförmigen Kontaktfläche 34 auf, die in Anlage an die Endfläche 36 des Hülsenabschnitts 16 gebracht werden kann. Der Grundkörper 32 enthält auch eine konkave Vertiefung 35 in der äußeren Oberfläche der Klappe 18, die der Erhöhung der Flexibilität der Klappe 18 dient. Die Kontaktfläche 34 bildet eine Ebene 38. Ein Klappenbefestigungselement 40 steht von einer Seite des Grundkörpers 32 ab und ist mit dem Hülsenbefestigungselement 28 verklebt. Die Ausrichtung eines scheibenförmigen Dichtelements 42 schließt einen Winkel mit der Ebene 38 ein. Ein Halsabschnitt 44 verbindet das Dichtelement 42 mit dem Grundkörper 32. Ein flexibler Bereich 43 reduzierter Dicke, der als Gelenkglied dient verbindet das Klappenbefestigungselement 40 mit dem Dichtelement 42. Der Grundkörper 32, das Dichtelement 42 und der Halsabschnitt 44 bilden eine Vertiefung 46, welche sich zu einer dem Klappenbefestigungselement 40 entgegengesetzten Richtung öffnet. Der flexible Bereich 43 ist beweglich, so daß sich die Klappe 18 aus ihrer in Fig. 1 dargestellten aktiven Schließlage in eine passive Schließlage bewegen läßt. In ihrer aktiven Schließlage ist die Klappe 18 lösbar mit dem Hülsenabschnitt 16 verrasted, das Dichtelement 42 greift an einem radial nach innen gerichteten Oberflächenbereich der inneren Lippe 23 an und ein Bereich der inneren Lippe 23 wird von der Vertiefung 46 aufgenommen. Die passive Schließlage ist in Fig. 3 dargestellt. In ihr greift das Schließlelement 42 an einem im wesentlichen axial nach außen gerichteten Oberflächenbereich der inneren Lippe 23 an. Eine ringförmige Aussparung 47 ist in den scheibenförmigen Grundkörper 32 eingelassen und stößt auf einer Seite an das Klappenbefestigungselement 40 an. Vorzugsweise sind das Hülsenbefestigungselement 28 und das Klappenbefestigungselement 40 durch Kleben oder Vulkanisieren miteinander befestigt. Eine Handhabe 48 steht von der Klappe 18 ab und läßt sich durch eine Bedienungsperson ergreifen und betätigen.

Wenn sich die Klappe 18 in ihrer passiven Schließlage befindet, wird die Klappe 18 vorzugsweise durch eine Vorspannung des flexiblen Bereichs 43 derart vorgespannt, daß das scheibenförmige Dichtelement 42 in Anlage an der inneren Lippe 23 bleibt, sofern keine manuelle Beeinflussung erfolgt.

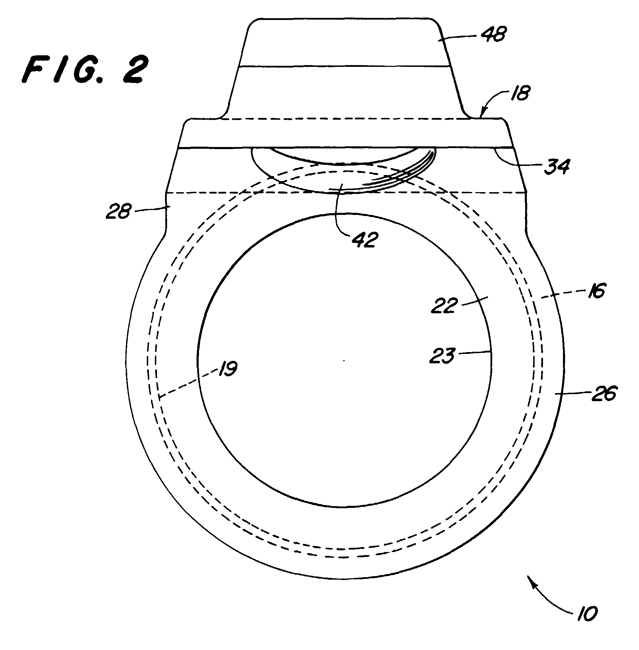

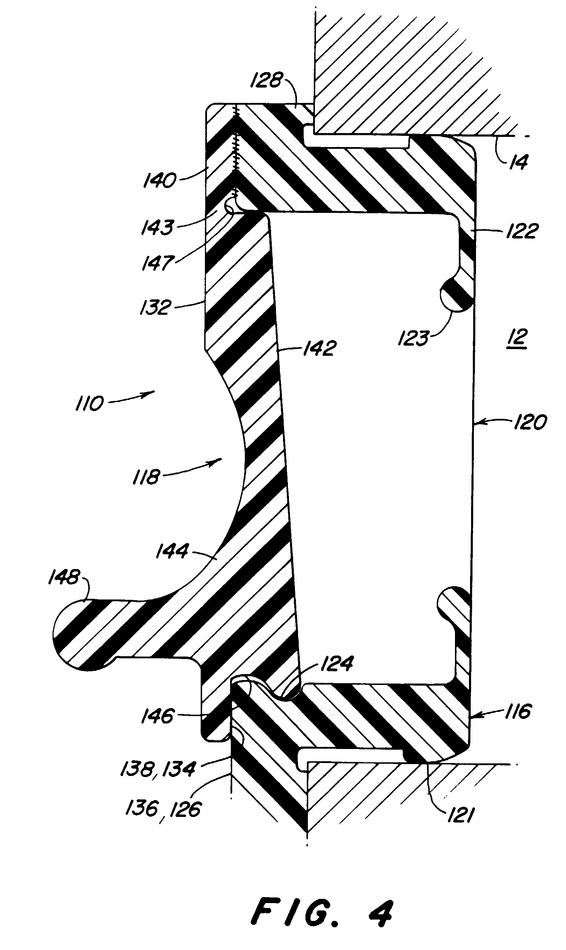

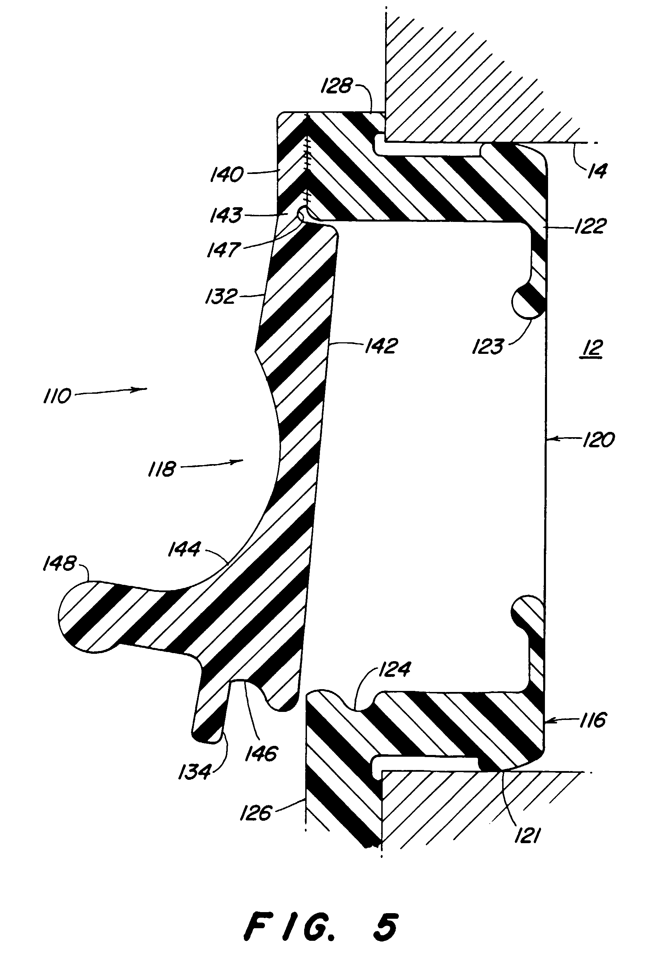

Fig. 4 und 5 zeigen eine alternative, bevorzugte Ausgestaltung einer erfindungsgemäßen Abdeckung oder Schutzkappe 110, die in die Öffnung 12 einer hydraulischen Anschlußkupplung 14 eingesetzt ist. Die Schutzkappe 110 ist bis auf die nachfolgenden Bemerkungen ähnlich zu der anhand der Fig. 1 bis 3 beschriebenen Schutzkappe 10 ausgebildet.

Der Hülsenabschnitt 116 enthält einen inneren Wulstrand 122, der sich von einem axial inneren Ende des Hülsenteils 120 radial nach innen erstreckt und der eine radial innere Lippe 123 bildet, die der dichtenden Anlage an einem nicht gezeigten Kupplungsstecker dient. Die innere Lippe 123 hat eine teilweise kreisförmige Querschnittsform mit einem äußeren Durchmesser, der größer ist als die Dicke des ringförmigen Wulstrandes 122. In der inneren Oberfläche des Hülsenabschnitts 116 ist auf der zum Klappenbefestigungsteil 140 gegenüberliegenden Seite eine Vertiefung 124 ausgebildet.

Eine kreisförmige Randzone 126 erstreckt sich von dem axial äußeren Ende des Hülsenteils 120 radial nach außen. Ein Hülsenbefestigungselement 128 springt von einer Seite der äußeren Randzone 126 vor.

Die Klappe 118 weist einen scheibenförmigen Grundkörper 132 mit einer ringförmigen Kontaktfläche 134 auf, die in Anlage an die Endfläche 136 des Hülsenabschnitts 116 gebracht werden kann. Der Grundkörper 132 enthält auch eine konkave Vertiefung 135 in der äußeren Oberfläche der Klappe 118, die der Erhöhung der Flexibilität der Klappe 118 dient. Die Kontaktfläche 134 bildet eine Ebene 138. Ein Klappenbefestigungselement 140 steht von einer Seite des Grundkörpers 132 ab und ist mit dem Hülsenbefestigungselement 128 verklebt. Die Ausrichtung eines scheibenförmigen Dichtelements 142 schließt einen Winkel mit der Ebene 138 ein. Ein flexibler Bereich 143 reduzierter Dicke verbindet das Klappenbefestigungselement 140 mit dem Dichtelement 142. Der Grundköper 132 und das Dichtelement 142 bilden eine Vertiefung 146, welche sich zu einer dem Klappenbefestigungselement 140 entgegengesetzten Richtung öffnet. Der flexible Bereich 143 ist beweglich, so daß sich die Klappe 118 aus einer aktiven Schließlage, die in Fig. 4 dargestellt ist und in der eine Seite des Dichtelements 142 von der Vertiefung 124 aufgenommen wird, in eine passive Schließlage bewegen läßt, in der das Dichtelement 142 an einem im wesentlichen axial nach außen gerichteten Oberflächenbereich der äußeren Randzone 126 anliegt. Die passive Schließlage ist in etwa in Fig. 5 dargestellt. Eine Aussparung 147 ist in den scheibenförmigen Grundkörper 132 zwischen dem Grundkörper 132 und dem Klappenbefestigungselement 140 eingelassen. Vorzugsweise sind das Hülsenbefestigungselement 128 und das Klappenbefestigungselement 140 durch Kleben oder Vulkanisieren miteinander verbunden. Eine Handhabe 148 steht von der Klappe 118 ab und läßt sich durch eine Bedienungsperson ergreifen und betätigen.

Wenn sich die Klappe 118 in ihrer passiven Schließlage befindet, wird die Klappe 118 vorzugsweise durch eine Vorspannung des flexiblen Bereichs 143 vorgespannt, so daß das Dichtelement 142 in Anlage an der Randzone 126 bleibt, sofern keine manuelle Beeinflussung erfolgt.

Bei beiden Ausführungsvarianten kann die Schutzkappe aus handelsüblichem Gummiwerkstoff mit den SAE J200 Erfordernissen M6 CH510 B14 C12 F17 bestehen. Es sind jedoch auch andere Materialien geeignet.

Die Klappe 18 und das Hülsenteil 20 können aus einem einzigen Teil oder aus zwei separaten Teilen bestehen, die, wie gezeigt wurde, miteinander verklebt sind.

## Patentansprüche

1. Schutzkappe zum Abdecken oder Verschließen der Öffnung einer Hydraulikkupplung (14) bestehend aus
- einem Hülsenabschnitt (16, 116), welcher dem Einsetzen in die Öffnung der Hydraulikkupplung (14) dient und der einen ringförmigen radial nach innen gerichteten Wulstrand (22, 122) aufweist,
- einem Gelenkglied (43, 143), das mit einem im wesentlichen axial äußeren Ende des Hülsenabschnitts (16, 116) verbunden ist,
- einer über das Gelenkglied (43, 143) mit dem Hülsenabschnitt (16, 116) verbundenen Klappe (18, 118), die durch das vorgespannte Gelenkglied (43, 143) in eine passive Schließlage gedrängt wird, in der die Klappe (18, 118) an einer im wesentlichen axial nach außen weisenden Randzone (23, 126) des Hülsenabschnitts (16, 116) angreift,
- und Rastmitteln (23, 46; 124, 146), die eine aktive Schließlage definieren, in die die Klappe (18, 118) manuell bewegbar ist und in der die Klappe (18, 118) schließend und lösbar mit dem Hülsenabschnitt (16, 116) verrastet.

2. Schutzkappe nach Anspruch 1, dadurch gekennzeichnet, daß der ringförmige radial nach innen gerichtete Wulstrand (22, 122) mit einem inneren Rand (23, 123), der eine Dichtung für einen einsteckbaren Kupplungsstecker bildet versehen ist, und daß sich der Wulstrand (22, 122) vorzugsweise im wesentlichen an einem axialen Ende des Hülsenabschnitts (16, 116) befindet.

3. Schutzkappe nach Anspruch 2, dadurch gekennzeichnet, daß sich der Wulstrand (22) im wesentlichen an dem der Klappe (18) zugewandten Ende des Hülsenabschnitts (16) befindet und daß in der passiven Schließlage die Klappe (18) an dem Wulstrand (22) angreift.

4. Schutzkappe nach Anspruch 2 oder 3, dadurch gekennzeichnet, daß der Wulstrand (22, 122) einen ringförmigen Abschnitt (30) aufweist, der sich von dem Hülsenabschnitt (16, 116) axial nach innen zum inneren Rand (23, 123) erstreckt, und daß der Rand (23, 123) einen bereichsweise kreisförmigen Querschnitt aufweist, dessen Durchmesser größer ist als die Dicke des ringförmigen Abschnitts (30).

5. Schutzkappe nach einem der Ansprüche 1 bis 4, dadurch gekennzeichnet, daß von dem der Klappe (18, 118) zugewandten Ende des Hülsenabschnitts (16, 116) eine ringförmige äußere Randzone (26, 126) nach außen absteht und daß sich auf einer Seite des Umfangs dieser Randzone (26, 126) ein der Befestigung des Gelenkgliedes (43, 143) dienendes hülsenseitiges Befestigungselement (28, 128) befindet.

6. Schutzkappe nach einem der Ansprüche 1 bis 5, dadurch gekennzeichnet, daß die Klappe (18, 118) einen scheibenförmigen Grundkörper (32, 132) mit einer ebenen Kontaktfläche (34, 134) aufweist, welche zur Anlage mit einer Stirnfläche des Hülsenabschnitts (16, 116) gebracht werden kann.

7. Schutzkappe nach Anspruch 6, dadurch gekennzeichnet, daß die Klappe (18, 118) ein scheibenförmiges Dichtelement (42, 142) mit einer bei geschlossener Klappe (18, 118) ins Hülseninnere weisenden Fläche, die zu der Kontaktfläche (34, 134) einen Winkel einschließt, aufweist.

8. Schutzkappe nach einem der Ansprüche 1 bis 7, dadurch gekennzeichnet, daß die Klappe (18, 118) einen scheibenförmigen Grundkörper (32, 132) und ein scheibenförmiges Dichtelement (42, 142) aufweist, die miteinander über einen Halsabschnitt (44, 144) verbunden sind, und daß der Grundkörper (32, 132), das Dichtelement (42, 142) und der Halsabschnitt (44, 144) eine Vertiefung (46, 146) bilden, welche sich in eine Richtung öffnet, die der Lage des Gelenkgliedes (43, 143) entgegengesetzt ist.

9. Schutzkappe nach Anspruch 7 oder 8, dadurch gekennzeichnet, daß das scheibenförmige Dichtelement (42, 142) mit einer nach innen weisenden Fläche (124) des Hülsenabschnitts (16, 116), insbesondere mit einem radial nach innen weisenden Oberflächenbereich (23) des inneren Wulstrandes (22), dichtend in Eingriff steht, sofern sich die Klappe (18, 118) in ihrer aktiven Dichtlage befindet.

10. Schutzkappe nach einem der Ansprüche 1 bis 8, dadurch gekennzeichnet, daß von einer Seite der Klappe (18, 118), insbesondere von einer Seite des Grundkörpers (32, 132) der Klappe (18, 118), ein klappenseitiges Befestigungselement (40, 140) absteht, daß mit einem hülsenseitigen Befestigungselement (28, 128) fest verbunden ist.

11. Schutzkappe nach einem der Ansprüche 1 bis 10, dadurch gekennzeichnet, daß die Klappe einen als Gelenkglied dienenden flexiblen Bereich (43, 143), insbesondere einen Bereich reduzierter Dicke aufweist, über den die Klappe (18, 118), insbesondere ihr scheibenförmiges Dichtelement (42, 142), mit einem hülsenseitigen Befestigungselement (28, 128) verbunden ist.

12. Schutzkappe nach einem der Ansprüche 6 bis 11, dadurch gekennzeichnet, daß in den scheibenförmigen Grundkörper (32, 132) eine wenigstens teilweise ringförmige Aussparung (47, 147) ausgeformt ist, die als Gelenkglied dient, und daß von einer Seite der Aussparung (47, 147) von dem Grundkörper (32, 132) ein klappenseitiges Befestigungselement (40, 140) absteht, daß mit einem hülsenseitigen Befestigungselement (28, 128) fest verbunden ist.

13. Schutzkappe nach einem der Ansprüche 1 bis 12, dadurch gekennzeichnet, daß in die nach außen weisende Oberfläche der Klappe (18, 118) eine konkave Vertiefung (35) eingelassen ist.

14. Schutzkappe nach einem der Ansprüche 1 bis 13, dadurch gekennzeichnet, daß die Klappe (18, 118) eine Handhabe (48, 148) aufweist, die im wesentlichen auf der dem Gelenkglied (43, 143) abgewandten Seite angeordnet ist.

15. Schutzkappe nach einem der Ansprüche 1 bis 14, dadurch gekennzeichnet, daß von der äußeren Umfangsfläche des Hülsenabschnitts (16, 116) eine ringförmige Rückhalterippe (21, 121) absteht, die dem Eingriff mit der Hydraulikkupplung (14) dient.

## Claims

1. A protective cap for covering or closing the opening of a hydraulic coupling (14), consisting of
- a sleeve section (16, 116), which serves to fit into the opening of the hydraulic coupling (14) and which has an annular inwardly directed rim (22, 122),
- a hinge member (43, 143) which is connected to an essentially axially outer end of the sleeve section (16, 116),
- a flap (18, 118) connected to the sleeve section (16, 116) by the hinge member (43, 143) and biased into a passive closed position by the pre-stressed hinge member (43, 143), in which position the flap (18, 118) engages against an essentially axially outwardly facing edge zone (26, 126) of the sleeve section (16, 116),
- and detent means (23, 46; 124, 146) which define an active closed position, into which the flap (18, 118) can be moved manually and in which the flap (18, 118) snap fits closed and releasably with the sleeve section (16, 116),

2. A protective cap according to claim 1, characterized in that the annular, radially inwardly directed rim (22, 122) is provided with an in inner edge (23, 123) which forms a seal for a coupling plug which can be inserted, and in that the rim (22, 122) is preferably located substantially at an axial end of the sleeve section (16, 116).

3. A protective cap according to claim 2, characterized in that the rim (22) is located substantially at the end of the sleeve section (16) facing the flap (18) and in that the flap (18) engages on the rim (22) in the passive closed position.

4. A protective cap according to claim 2 or 3, characterized in that the rim (22, 122) has an annular section (30) which extends axially inwards to the inner edge (23, 123) and in that the edge (23, 123) has a locally circular cross-section, whose diameter is greater than the thickness of the annular section (30).

5. A protective cap according to any of claims I to 4, characterized in that an annular, outer edge zone (26, 126) projects outwardly from the end of the sleeve section (16, 116) facing the flap (18, 118) and in that a sleeve-side fixing element (28, 128) is located on one side of the periphery of this edge zone (26, 126), serving for fixing the hinge member (43, 143).

6. A protective cap according to any of claims 1 to 5, characterized in that the flap (18, 118) comprises a disc-shaped base body (32, 132) with a flat contact surface (34, 134), which can be brought into abutment with an end surface of the sleeve section (16, 116).

7. A protective cap according to claim 6, characterized in that the flap (18, 118) comprises a disc-shaped sealing element (43, 142) with a surface which faces into the interior of the sleeve with the flap (18, 118) closed and which makes an angle with the contact surface (34, 134).

8. A protective cap according to any of claims 1 to 7, characterized in that the flap (18, 118) comprises a disc-shaped base body (32, 132) and a disc-shaped sealing element (42, 142), which are connected together by a neck section (44, 144), and in that the base body (32, 132), the sealing element (42, 142) and the neck section (44, 144) form a recess (46, 146), which opens in a direction which is opposite to the position of the hinge member (43, 143).

9. A protective cap according to claim 7 or 8, characterized in that the disc-shaped sealing element (42, 142) makes sealing engagement with an inwardly facing surface (124) of the sleeve section (16, 116), especially with a radially inwardly facing surface region (23) of the inner rim (22), insofar as the flap (18, 118) is in its active sealing position.

10. A protective cap according to any of claims 1 to 8, characterized in that a fixing element (40, 140) on the flap side projects from one side of the flap (18, 118), especially from one side of the base body (32, 132) of the flap (18, 118) and is fixedly attached to a fixing element (28, 128) on the sleeve side.

11. A protective cap according to any of claims 1 to 10, characterized in that the flap comprises a flexible region (43, 143), especially a region of reduced thickness, serving as the hinge member, through which the flap (18, 118), especially its disc-shaped sealing element (42, 142), is connected to a fixing element (28, 128) on the sleeve side.

12. A protective cap according to any of claims 6 to 11, characterized in that an at least partially annular recess (47, 147) is shaped in the disc-shaped base body (32, 132) and serves as the hinge member, and in that a fixing element (40, 140) on the flap side projects from one side of the recess (47, 147) from the base body (32, 132) and is fixedly attached to a fixing element (28, 128) on the sleeve side.

13. A protective cap according to any of claims 1 to 12, characterized in that a concave depression (35) is provided in the outwardly facing surface of the flap (18, 118).

14. A protective cap according to any of claims 1 to 13, characterized in that the flap (18, 118) has a handle (48, 148) disposed essentially on the side remote from the hinge member (43, 143).

15. A protective cap according to any of claims 1 to 14, characterized in that an annular retaining rib (21, 121) projects from the outer peripheral surface of the sleeve section (16, 116) and serves for engagement with the hydraulic coupling (14).

## Revendications

1. Capuchon de protection destiné à ouvrir ou fermer l'ouverture d'un accouplement hydraulique (14), constitué par
- une partie formant douille (16, 116), qui est destinée à être insérée dans l'ouverture de l'accouplement hydraulique (14) et possède un rebord annulaire (22, 32) dirigé radialement vers l'intérieur;
- un organe d'articulation (43, 143), qui est relié à une extrémité, essentiellement extérieure du point de vue radial, de la partie formant douille (16, 116),
- un clapet (18, 118) relié à la partie formant douille (16, 116) et qui est repoussé, par l'élément d'articulation précontraint (43, 143), dans une position fermée passive, dans laquelle le clapet (18, 118) s'applique contre une zone marginale (23, 126), qui est dirigée essentiellement axialement vers l'extérieur, de la partie formant douille (16, 116), et
- des moyens d'encliquetage (23, 46; 124, 146) qui définissent une position fermée active, dans laquelle le clapet (18, 118) est déplaçable manuellement et dans laquelle le clapet (18, 118) s'encliquette de façon amovible, en réalisant la fermeture avec la partie formant douille (16, 116).

2. Capuchon de protection selon la revendication 1, caractérisé en ce que le rebord annulaire (22, 122) dirigé radialement vers l'intérieur comporte un bord latéral (23, 123), qui forme un élément d'étanchéité pour un raccord d'accouplement enfichable, et que le rebord (22, 122) est situé de préférence essentiellement sur une extrémité axiale de la partie formant douille (16, 116).

3. Capuchon de protection selon la revendication 2, caractérisé en ce que le rebord (22) est situé essentiellement sur l'extrémité, qui est tournée vers le clapet (18), de la partie formant douille (16) et que dans la position fermée passive, le clapet (18) s'engage sur le rebord (22).

4. Capuchon selon la revendication 2 ou 3, caractérisé en ce que le rebord (22, 122) possède une partie de forme annulaire (30), qui s'étend latéralement vers l'intérieur depuis la partie formant douille (16, 116) en direction du bord intérieur (23, 123) et que le bord (23, 123) possède une section transversale qui possède par endroits une forme circulaire et dont le diamètre est supérieur à l'épaisseur de la partie de forme annulaire (3).

5. Capuchon de protection selon l'une des revendications 1 à 4, caractérisé en ce qu'une zone marginale extérieure de forme annulaire (26, 126) fait saillie vers l'extérieur à partir de l'extrémité, tournée vers le clapet (18, 118), de la partie formant douille (16, 116), et qu'un élément de fixation (28, 128) en forme de douille, qui est utilisé pour la fixation de l'organe d'articulation (43, 143), est situé sur un côté de la périphérie de cette zone marginale (26, 126).

6. Capuchon de protection selon l'une des revendications 1 à 5, caractérisé en ce que le clapet (18, 118) possède un corps de base en forme de vis (32, 132) pourvu d'une surface de contact plane (34, 134) qui peut s'appliquer contre une face frontale de la partie formant douille (16, 116).

7. Capuchon de protection selon la revendication 6, caractérisé en ce que le clapet (18, 118) possède un élément d'étanchéité en forme de disque (42, 142) possédant une surface, qui est dirigée vers l'intérieur de la douille lorsque le clapet (18, 118) est fermé, et fait un angle avec la surface de contact (34, 134).

8. Capuchon de protection selon l'une des revendications 1 à 7, caractérisé en ce que le clapet (18, 118) possède un corps de base en forme de disque (32, 132) et un élément d'étanchéité en forme de disque (42, 142), qui sont reliés par l'intermédiaire d'une partie formant col (44, 144) et que le corps de base (32, 132), l'élément d'étanchéité (52, 152) et la partie formant col (44, 144) forment un renfoncement (46, 146) qui s'ouvre dans une direction qui est tournée à l'opposé de la position de l'organe d'articulation (43, 143).

9. Capuchon de protection selon la revendication 7 ou 8, caractérisé en ce que l'élément d'étanchéité en forme de disque (42, 142) s'applique d'une manière étanche contre une surface (124), tournée vers l'intérieur, de la partie formant douille (16, 116), notamment contre un élément de surface (23), qui est dirigé radialement vers l'intérieur, du rebord intérieur (22), dans la mesure où le clapet (18, 118) est situé dans sa position active d'étanchéité.

10. Capuchon de protection selon l'une des revendications 1 à 8, caractérisé en ce qu'à partir d'un côté du clapet (18, 118), notamment à partir d'un côté du corps de base (32, 132) du clapet (18, 118), fait saillie un élément de fixation (40, 140) situé côté clapet, et qui est relié à un élément de fixation (28, 128) situé côté douille.

11. Capuchon de protection selon l'une des revendications 1 à 10, caractérisé en ce que le clapet possède une partie flexible (43, 143) utilisée comme organe d'articulation, notamment une partie d'épaisseur réduite, au moyen de laquelle le clapet (18, 118), notamment son élément d'étanchéité en forme de disque (42, 142), est relié à un élément de fixation (28, 128) situé côté douille.

12. Capuchon de protection selon l'une des revendications 6 à 11, caractérisé en ce que dans le corps de base en forme de disque (32,33) est formé un évidement de forme au moins partiellement annulaire (47, 147), qui est utilisé en tant qu'organe d'articulation et qu'à partir d'un côté de l'évidement (47, 147), un élément de fixation en forme de clapet (40, 140), qui est relié rigidement à l'élément de fixation (28, 128) situé côté douille fait saillie à partir du corps de base (32, 132).

13. Capuchon de protection selon l'une des revendications 1 à 12, caractérisé en ce qu'un renfoncement (34, 134) est aménagé dans la surface, tournée vers l'intérieur, du clapet (18, 118).

14. Capuchon de protection selon l'une des revendications 1 à 13, caractérisé en ce que le clapet (18, 118) possède une poignée (48, 148), qui est disposée essentiellement sur le côté situé à l'opposé de l'organe d'articulation (43, 143).

15. Capuchon de protection selon l'une des revendications 1 à 14, caractérisé en ce qu'une nervure annulaire de retenue (21, 121), qui est destinée à engrener avec l'accouplement hydraulique (14) fait saillie à partir de la surface circonférentielle extérieure de la partie formant douille (16, 116).
